# FASCICULE DE BREVET EUROPEEN

(11) **EP 1 892 542 B1**
(45) Date de publication et mention de la délivrance du brevet: **16.03.2016**
(21) Numéro de dépôt: 07109177.1
(22) Date de dépôt: 30.05.2007
(51) Int. Cl.: G01V 3/10, G01T 1/167

(54) **Portique détecteur de métaux comportant des moyens indicateurs perfectionnés**
Durchgangsmetalldetektor, der perfektioniere Anzeigemittel umfasst.
Metal detector portal comprising improved indicator means

(30) Priorité: 30.05.2006 FR 0604794
(43) Date de publication de la demande: 27.02.2008
(73) Titulaire: Manneschi, M. Alessandro, 52100 Arezzo (IT)
(72) Inventeur: Manneschi, M. Alessandro, 52100 Arezzo (IT)
(74) Mandataire: Regimbeau

(56) Documents cités:
- WO-A-03/069320
- WO-A-2004/097456
- US-A- 3 997 787
- US-A- 5 440 135
- US-A- 5 446 288
- US-A1- 2004 046 550
- "LARGE-AREA RADIATION PORTAL/PERSONNEL MONITOR" NTIS TECH NOTES, US DEPARTMENT OF COMMERCE. SPRINGFIELD, VA, US, 1 septembre 1987 (1987-09-01), pages 859-860, XP000007284 ISSN: 0889-8464

## Description

La présente invention concerne le domaine des détecteurs de métaux.

La présente invention s'applique en particulier aux détecteurs de métaux destinés au contrôle d'accès à des milieux sensibles, tels que et sans limitation aucune, les aéroports, banques, ambassades, installations militaires, musées, etc ...

On sait que la plupart des systèmes détecteurs de métaux proposés dans ce contexte comprennent des bobinages émetteurs, des bobinages récepteurs et un circuit de traitement électronique adapté pour déceler des variations de signaux reçus sur les bobinages récepteurs, par rapport à une valeur de référence.

Ces détecteurs ont généralement la forme globale d'un portique ou tunnel par lequel transitent les individus, voire les matériels à contrôler.

On trouvera des exemples de réalisation de détecteurs connus dans les documents FR-A-2720519, FR-A-2773350, FR-A-2516251, FR-A-2610417, FR-A-2607937, FR-A-2697919, FR-A-2698178 et FR-A-2698968, IT 1271382, IT 1216946, IT 1260208, IT 1249278, IT 1214991 et FN 913502.

Les détecteurs de métaux connus ont rendu de grands services. Cependant, ils ne donnent pas toujours satisfaction.

En effet de nos jours il s'avère insuffisant de détecter le port d'objets métalliques à l'entrée de sites sensibles.

En particulier, il s'avère également nécessaire de détecter notamment la présence éventuelle de sources ou particules émettant des rayonnements radioactifs. Et du fait de la complexité des détections requises, le passage des détecteurs de métaux ralentit fréquemment le flux de personnes cherchant à accéder au milieu dit sensible, par exemple un musée, une salle d'embarquement dans un aéroport, etc ...

Un tel frein est bien entendu une source d'inconfort et de mécontentement, notamment lorsque dans le cas d'une salle d'embarquement dans un aéroport, il s'agit d'accéder à un aéronef prévu pour décollage immédiat, et/ou d'une manière générale lorsque le passage des détecteurs de métaux conduit à une attente longue, particulièrement pour toutes les personnes sujettes à difficulté en cas d'attente prolongée en station debout, comme les personnes âgées.

Des procédures d'information ont été mises en place pour préparer l'utilisateur au franchissement des détecteurs de métaux, par exemple en informant au préalable l'utilisateur de la nécessité de retirer veste ou équivalent et de déposer parfois certains objets, téléphone portable, pièces, etc... dans des bacs dédiés à cet effet.

Cependant, ces procédures n'ont pas permis de gagner un temps significatif lors du passage des détecteurs.

Le Demandeur a constaté de son côté, après de longues observations, que le retard occasionné lors du passage de tels détecteurs est dû en partie au temps requis pour permettre au personnel de sécurité exploitant les détecteurs d'appréhender le message généré par le détecteur et conduire le cas échéant des investigations complémentaires avant d'autoriser l'utilisateur à accéder à la zone sensible.

L'homme de l'art sait que de nos jours deux types de message sont délivrés par les portiques détecteurs de métaux connus : des messages sonores et/ou des messages visuels. Concernant, les messages sonores les portiques connus sont plus précisément généralement adaptés pour émettre un son si un objet métallique non autorisé est détecté et au contraire rester silencieux si aucun objet interdit n'est détecté. Concernant les messages visuels les portiques connus sont généralement adaptés, soit pour délivrer des informations de texte sur un écran, soit pour alimenter une source lumineuse ou une série de sources lumineuses réparties sur la hauteur du portique pour visualiser à quelle hauteur l'objet suspect a été détecté.

Le document WO 2004/097456 a suggéré, dans un portique démontable, d'utiliser un affichage à base de diodes électroluminescentes multicolores pour visualiser l'importance du signal détecté. Cependant une telle proposition n'a pas connu jusqu'ici un développement industriel. En effet l'utilisation de diodes multicolores pour visualiser l'amplitude du signal, conduit à des difficultés d'interprétation par le personnel en charge de la surveillance des flux de personnes à l'aide des détecteurs de métaux.

Le document WO-A-03/069320 décrit un portique qui combine des moyens détecteurs de métaux et des moyens détecteurs d'un rayonnement radioactif. Ce document préconise des moyens d'alarme qui génèrent un signal de nature physique différente selon que l'alarme provient de la détection d'un métal ou de la détection d'une radiation : un signal sonore en cas de détection de métal et un signal visuel en cas de détection d'une radiation.

Au vu de cet état de la technique, la présente invention a pour but de proposer de nouveaux moyens permettant d'améliorer la situation, notamment facilitant le transfert des personnes contrôlées en accélérant l'exploitation des signaux d'alarme par le personnel de sécurité.

Ce but est atteint dans le cadre de la présente invention grâce à un portique détecteur de métaux tel que defini en revendication 1 annexée.

Selon une autre caractéristique avantageuse de la présente invention, le module d'alimentation et de traitement et la série de sources lumineuses sont de plus adaptés pour générer des rayonnements optiques de couleurs différentes selon la nature du signal détecté par le capteur formant détecteur de masses métalliques.

D'autres caractéristiques, buts et avantages de la présente Invention apparaîtront à la lecture de la description détaillée qui va suivre, et en regard des dessins annexés, donnés à titre d'exemples non limitatifs et sur lesquels :
- la figure 1 représente une vue schématique en perspective d'un portique détecteur de métaux conforme à un premier mode de réalisation de la présente invention,
- la figure 2 représente une vue en perspective similaire d'un portique détecteur de métaux conforme à une seconde variante de réalisation de la présente invention, et
- la figure 3 représente une vue schématique des moyens essentiels constitutifs d'un portique conforme à la présente invention.

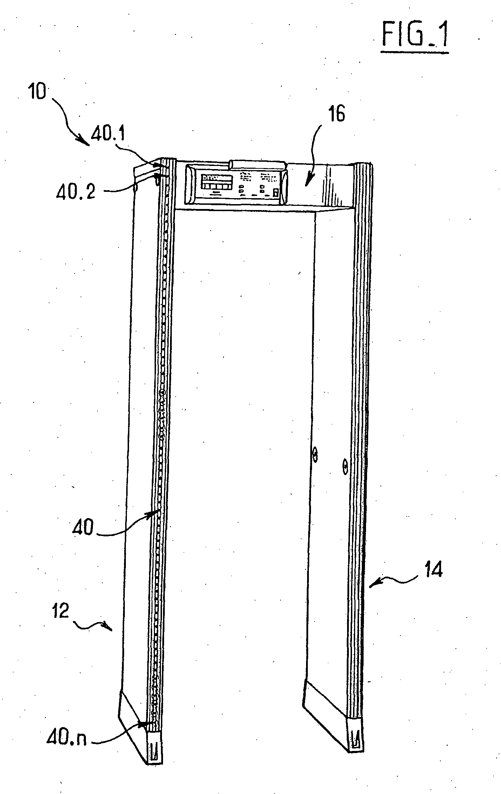

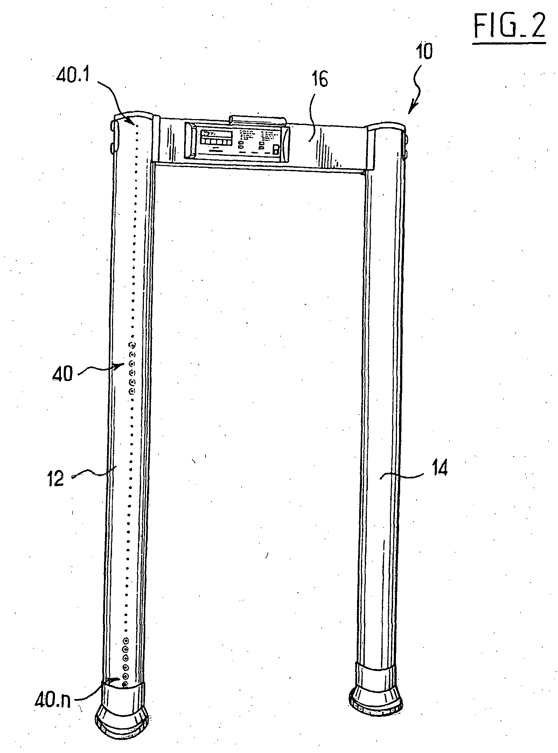

On aperçoit sur les figures 1 et 2 annexées, des portiques détecteurs de métaux 10 conformes à la présente invention. Ces portiques 10 comprennent de façon connue en soi, une structure en U comprenant deux montants verticaux 12, 14, reliés à leur partie supérieure par une traverse horizontale 16. Cette dernière peut être équipée de tout dispositif de visualisation et/ou tout élément de commande classique en soi.

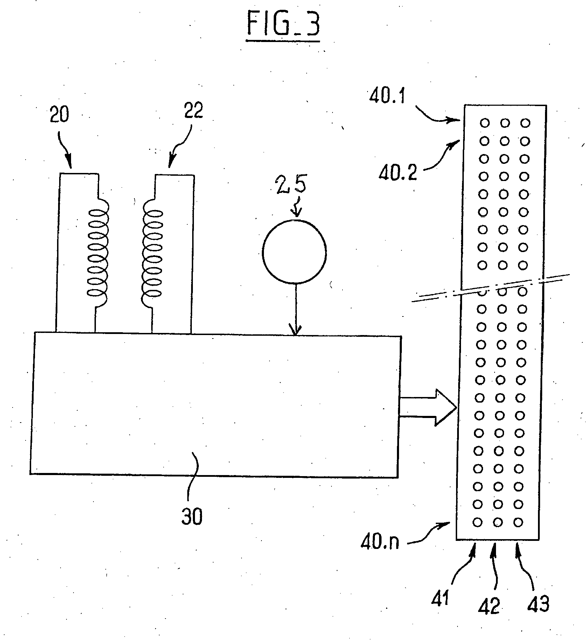

Les deux montants 12, 14 logent des bobinages 20, 22, schématisés sur la figure 3, reliés à un module d'alimentation et de contrôle ou traitement 30.

Les bobinages constituent pour certains des émetteurs 20 et pour les autres des récepteurs 22. Les mêmes bobinages peuvent d'ailleurs formés alternativement émetteur et/ou récepteur.

De nombreuses variantes de réalisation de tels bobinages 20, 22 et module 30 d'alimentation et de contrôle associé, sont bien connues de l'homme de l'art et ne seront pas décrites dans le détail par la suite.

Sur la figure 3, on a schématisé un seul bobinage émetteur 20 et un seul bobinage récepteur 22. En pratique, la structure des bobinages est cependant beaucoup plus complexe, de préférence pour former plusieurs canaux.

On connaît ainsi fréquemment aujourd'hui dans les portiques, des structures comprenant au moins 5 à 8 bobinages émetteurs et au moins 5 à 10 bobinages récepteurs.

Le module 30 a pour fonction d'analyser le signal prélevé sur un bobinage récepteur 22 pour déceler la présence de métaux influençant le champ magnétique et/ou électrique et donc le couplage entre bobinage(s) émetteur(s) et bobinage(s) récepteur(s), ainsi que le cas échéant, selon la configuration des bobinages et la nature du traitement opéré par le module 30, la géométrie des objets détectés, leur densité, leur masse, etc ...

La configuration des bobinages 22 et la nature des signaux ainsi que le traitement opéré par le module 30 sont aujourd'hui adaptés pour opérer une analyse de plus en plus fine des objets portés par les individus à contrôler qui transitent par le portique 10.

On comprend à l'examen des figures 1 et 2 que le portique 10 définit en effet un passage, entre les montants 12, 14 par lequel transitent les personnes à contrôler.

Comme on le voit sur la figure 3, le dispositif conforme à la présente invention comprend en outre un capteur 25 formant détecteur de rayonnement radioactif, associé au module 30. Un tel capteur 25 peut être formé de tout détecteur approprié, par exemple un capteur Geiger, voire un détecteur gamma ou équivalent.

Plus précisément encore, la figure 1 représente un portique du type dit à panneaux. Dans ce cas, les montants 12, 14 présentent une forme générale en plaque ou panneau, c'est à dire une faible épaisseur transversalement à la direction de passage et une largeur significative parallèlement à cette direction. On a par ailleurs représenté sur la figure 2, un portique dit à colonnes. Dans ce cas, les montants ont une forme sensiblement circulaire de révolution.

Selon l'invention, comme on l'a évoqué précédemment, l'un au moins des montants 12, 14 porte une barrette verticale 40 de sources: lumineuses réparties sur sa hauteur.

Le module 30 est adapté pour commander les sources lumineuses 40 de sorte que celles-ci émettent une première couleur lors de la détection de masses métalliques et émettent une deuxième couleur, différente de la première couleur, lors de la détection d'un rayonnement radioactif.

De préférence, mais non limitativement, Le module 30 est adapté pour commander les sources lumineuses 40 de sorte que celles-ci émettent une couleur rouge lors de la détection de masses métalliques, émettent une couleur bleue lors de la détection d'un rayonnement radioactif et émettent une couleur verte en l'absence d'alarme.

Selon une autre caractéristique avantageuse de la présente invention, le module 30 et les sources lumineuses associées 40 peuvent être adaptées pour générer un rayonnement lumineux de couleurs différentes selon la nature du signal détecté sur le ou les bobinage(s) récepteur(s) 22 par le module 30.

Plus précisément, comme on l'a schématisé sur les figures annexées, la barrette 40 comprend n ensembles de sources 40.1, 40.2, ... 40.n répartis sur la hauteur du montant. Le nombre d'ensembles 40 répartis ainsi sur la hauteur d'un montant dépend de la résolution de la détection géographique que l'on souhaite visualiser.

Chacun des n ensembles 40 peut être formé d'une source unique adaptée pour émettre une onde lumineuse de longueur d'onde variable selon l'excitation appliquée par le module 30.

En variante, chaque ensemble 40 peut comprendre, comme schématisé sur la figure 3, plusieurs sources 41, 42, 43 adaptées pour émettre respectivement des rayonnements optiques de longueur d'onde différente, les sources optiques 41, 42, 43 composant chaque ensemble 40 étant sélectivement alimentées par le module 30 en fonction du signal détecté. A titre d'exemple non limitatif les sources 41 peuvent émettre une couleur rouge lors de la détection d'une masse métallique, les sources 42 peuvent émettre une couleur bleue lors de la détection d'un rayonnement radioactif et les sources 43 peuvent émettre une couleur verte en l'absence de toute détection d'anomalie.

On a schématisé sur la figure 3, trois sources lumineuses composant chaque ensemble 40. Ce mode de réalisation particulier n'est cependant donné qu'à titre illustratif et non pas limitatif.

Dans le cadre de la présente invention, la commande des sources lumineuses 40, et par conséquent de la longueur d'onde émise peut dépendre de différents paramètres, en sus de la distinction entre la détection de masses métalliques et la détection de rayonnement radioactif.

Il peut s'agir de l'intensité du signal détecté représentatif d'un métal, c'est-à-dire globalement de l'importance de la masse ainsi détectée.

Il peut s'agir également de la nature du métal détecté, la couleur émise permettant par exemple de distinguer entre un matériau non magnétique, un matériau magnétique, de l'acier inoxydable, etc ...

En pratique lorsqu'un objet suspect est détecté, le module 30 peut piloter l'alimentation de plusieurs sources 40 adjacentes, selon l'importance de l'objet détecté, comme illustré schématiquement sur les figures annexées.

En variante on peut par exemple prévoir de disposer une barrette 40 de sources lumineuses sur chacun des deux montants 12 et 14 et ce le cas échéant sur chacun des côtés amont et aval, en référence au sens de passage, de ceux-ci.

Dans le cas où l'on prévoit une barrette 40 sur chacun des montants 12, 14, l'on peut par ailleurs prévoir de piloter les deux barrettes de manière différente en fonction de la position horizontale latérale des objets détectés : alimentation identique des deux barrettes 40 pour un objet détecté au centre du portique, alimentation de la barrette 40 seule située sur le côté gauche du portique pour un objet détecté sur le côté gauche du portique et alimentation de la barrette 40 seule située sur le côté droit du portique pour un objet détecté sur le côté droit du portique. Bien entendu dans ce contexte, les barrettes 40 peuvent visualiser simultanément plusieurs objets détectés à des hauteurs différentes (sur les deux barrettes pour des objets détectés au centre du portique, et sur une seule barrette pour des objets détectés sur un côté du portique). Cette disposition permet de fournir une indication sur la localisation géométrique des objets détectés, à la fois en hauteur et en position horizontale ou latérale.

L'homme de l'art comprendra que la présente invention offre de nombreux avantages par rapport aux portiques connus de l'état de la technique. En effet, le portique conforme à la présente invention permet de fournir une information additionnelle décisive permettant de visualiser immédiatement et simultanément la nature de la détection et sa localisation. Le portique conforme à la présente invention permet ainsi une réaction immédiate du personnel de sécurité et permet d'accélérer le flux de transit de personnes à contrôler.

Selon une autre caractéristique avantageuse de la présente invention, le module 30 est adapté pour piloter l'émission d'une couleur spécifique, par exemple du violet, lors de la détection de plomb ou tout matériau équivalent susceptible de former une enveloppe de masquage d'une source radioactive.

## Revendications

1. Portique détecteur de métaux comprenant deux montants (12, 14) logeant des capteurs formant détecteur de masses métalliques, notamment des bobinages émetteurs/récepteurs (20, 22), associés à un module d'alimentation et de traitement (30), et définissant entre eux un canal de passage pour des individus à contrôler, et un détecteur de rayonnement radioactif (25) associé au module d'alimentation et de traitement (30) **caractérisé par le fait que** l'un au moins des montants (12, 14) comprend une série de sources lumineuses (40) réparties sur sa hauteur pour visualiser des alarme et que ledit module est adapté pour commander les sources lumineuses (40) de sorte que celles-ci émettent une première couleur lors de la détection de masses métalliques et émettent une deuxième couleur, différente de la première couleur, lors de la détection d'un rayonnement radioactif.

2. Portique selon la revendication 1, **caractérisé par le fait que** le module d'alimentation et de traitement (30) et la série de sources lumineuses (40) sont adaptés pour générer des rayonnements optiques de couleurs différentes selon la nature du signal détecté par ledit module (30) sur les bobinages récepteurs (22).

3. Portique selon l'une des revendications 1 ou 2, **caractérisé par le fait que** la série de sources lumineuses (40) réparties sur la hauteur d'un montant comprend n ensembles de sources (40 .1, 40.2, ...40.n), réparties sur la hauteur, chaque ensemble comprenant une source unique adaptée pour émettre une onde lumineuse de couleur différente selon son excitation.

4. Portique selon l'une des revendications 1 ou 2, **caractérisé par le fait que** la série de sources lumineuses (40) répartie sur la hauteur d'un montant comprend n ensembles de sources (40 .1, 40.2, ...40.n), réparties sur la hauteur, chaque ensemble comprenant plusieurs sources lumineuses adaptées pour émettre des rayonnements optiques de longueur d'onde différente selon le signal d'excitation reçu.

5. Portique selon l'une des revendications 1 à 4, **caractérisé par le fait que** la couleur émise par une source lumineuse (40) dépend de l'intensité du signal détecté représentatif d'un métal.

6. Portique selon l'une des revendications 1 à 5, **caractérisé par le fait que** la couleur émise par une source lumineuse (40) dépend de l'importance de la masse de métal détectée.

7. Portique selon l'une des revendications 1 à 6, **caractérisé par le fait que** la couleur émise par une source lumineuse (40) dépend de la nature du métal détecté.

8. Portique selon l'une des revendications 1 à 7, **caractérisé par le fait que** la couleur émise par une source lumineuse (40) permet de distinguer entre un matériau non magnétique, un matériau magnétique et de l'acier inoxydable.

9. Portique selon l'une des revendications 1 à 8, **caractérisé par le fait que** le module (30) est adapté pour commander les sources lumineuses (40) de sorte que celles-ci émettent une couleur rouge lors de la détection de masses métalliques et émettent une couleur bleue lors de la détection d'un rayonnement radioactif.

10. Portique selon l'une des revendications 1 à 9, **caractérisé par le fait que** le module (30) est adapté pour commander les sources lumineuses (40) de sorte que celles-ci émettent une première couleur lors de la détection de masses métalliques, émettent une deuxième couleur lors de la détection d'un rayonnement radioactif et émettent une troisième couleur en l'absence d'alarme.

11. Portique selon la revendication 10, **caractérisé par le fait que** le module (30) est adapté pour commander les sources lumineuses (40) de sorte que celles-ci émettent une couleur rouge lors de la détection de masses métalliques, émettent une couleur bleue lors de la détection d'un rayonnement radioactif et émettent une couleur verte en l'absence d'alarme.

12. Portique selon l'une des revendications 1 à 11, **caractérisé par le fait que** le module (30) est adapté pour piloter l'émission d'une couleur spécifique, lors de la détection de plomb ou tout matériau équivalent susceptible de former une enveloppe de masquage d'une source radioactive.

13. Portique selon l'une des revendications 1, à 12, **caractérisé par le fait que** le module (30) est adapté pour piloter l'émission d'une couleur violette, lors de la détection de plomb ou tout matériau équivalent susceptible de former une enveloppe de masquage d'une source radioactive.

14. Portique selon l'une des revendications 1 à 13, **caractérisé par le fait qu'**il comprend une série de sources lumineuses (40) pour visualiser des alarmes, sur chacun des deux montants (12, 14).

15. Portique selon l'une des revendications 1 à 14, **caractérisé par le fait qu'**il comprend une série de sources lumineuses (40) pour visualiser des alarmes, sur chacun des côtés amont et aval des montants (12, 14), en référence au sens de passage, de ceux-ci.

16. Portique selon l'une des revendications 1 à 15, **caractérisé par le fait qu'**il comprend une série de sources lumineuses (40) pour visualiser des alarmes, sur chacun des deux montants (12, 14) et que le module d'alimentation et de traitement (30) est adapté pour piloter les deux séries de sources lumineuses (40) prévues respectivement sur chacun des deux montants (12, 14), de manière différente en fonction de la position horizontale latérale des objets détectés : alimentation Identique des deux séries de sources (40) pour un objet détecté au centre du portique, alimentation de la série de sources (40) seule située sur le côté gauche du portique pour un objet détecté sur le côté gauche du portique et alimentation de la série de sources (40) seule située sur le côté droit du portique pour un objet détecté sur le côté droit du portique.

## Patentansprüche

1. Metalldetektorportal, umfassend zwei Pfosten (12, 14), die Sensoren aufnehmen, welche Detektoren für Metallmassen bilden, insbesondere Sender- / Empfängerspulen (20, 22), die einem Versorgungs- und Bearbeitungsmodul (30) zugeordnet sind und untereinander einen Durchgangskanal für zu kontrollierende Individuen definieren, und einen Detektor für radioaktive Strahlen (25), der dem Versorgungs- und Bearbeitungsmodul (30) zugeordnet ist, **gekennzeichnet durch** die Tatsache, dass wenigstens einer der Pfosten (12, 14) eine Serie von Lichtquellen (40) umfasst, die auf seiner Höhe verteilt sind, um Alarme anzuzeigen und das genannte Modul geeignet ist, um die Lichtquellen (40) derart zu steuern, dass diese eine erste Farbe bei der Detektion von Metallmassen ausgeben und eine zweite, von der ersten Farbe unterschiedliche Farbe bei der Detektion einer radioaktiven Strahlung ausgeben.

2. Portal gemäß Anspruch 1, **gekennzeichnet durch** die Tatsache, dass das Versorgungs- und Bearbeitungsmodul (30) und die Serie von Lichtquellen (40) geeignet sind, um optische Strahlungen unterschiedlicher Farben je nach der Art des von dem genannten Modul (30) auf den Empfängerspulen (22) erfassten Signal zu erzeugen.

3. Portal gemäß Anspruch 1 oder 2, **gekennzeichnet durch** die Tatsache, dass die Serie von Lichtquellen (40), die auf der Höhe eines Pfostens verteilt sind, n Gruppen von Quellen (40.1, 40.2, ..., 40.n) umfasst, die auf der Höhe verteilt sind, wobei jede Gruppe eine einzigartige Quelle umfasst, die geeignet ist, um eine Lichtquelle unterschiedlicher Farbe je nach ihrer Erregung auszugeben.

4. Portal gemäß Anspruch 1 oder 2, **gekennzeichnet durch** die Tatsache, dass die Serie von Lichtquellen (40), die auf der Höhe eines Pfostens verteilt ist, n Gruppen von Quellen (40.1, 40.2, ..., 40.n) umfasst, die auf der Höhe verteilt sind, wobei jede Gruppe mehrere Lichtquellen umfasst, die geeignet sind, um optische Strahlungen unterschiedlicher Wellenlänge je nach dem empfangenen Erregungssignal auszugeben.

5. Portal gemäß Anspruch 1 bis 4, **gekennzeichnet durch** die Tatsache, dass die von einer Lichtquelle (40) ausgegebene Farbe von der Intensität des detektierten Signals abhängt, das ein Metall darstellt.

6. Portal gemäß Anspruch 1 bis 5, **gekennzeichnet durch** die Tatsache, dass die von einer Lichtquelle (40) ausgegebene Farbe von dem Umfang der detektierten Metallmasse abhängt.

7. Portal gemäß Anspruch 1 bis 6, **gekennzeichnet durch** die Tatsache, dass die von einer Lichtquelle (40) ausgegebene Farbe von der Art des detektierten Metalls abhängt.

8. Portal gemäß Anspruch 1 bis 7, **gekennzeichnet durch** die Tatsache, dass die von einer Lichtquelle (40) ausgegebene Farbe die Unterscheidung zwischen einem nicht magnetischen Material, einem magnetischen Material und rostfreiem Stahl zulässt.

9. Portal gemäß Anspruch 1 bis 8, **gekennzeichnet durch** die Tatsache, dass das Modul (30) geeignet ist, um die Lichtquellen (40) derart zu steuern, dass diese eine rote Farbe bei der Detektion von Metallmassen ausgeben und eine blaue Farbe bei der Detektion einer radioaktiven Strahlung ausgeben.

10. Portal gemäß Anspruch 1 bis 9, **gekennzeichnet durch** die Tatsache, dass das Modul (30) geeignet ist, um die Lichtquellen (40) derart zu steuern, dass diese eine erste Farbe bei der Detektion von Metallmassen ausgeben, eine zweite Farbe bei der Detektion einer radioaktiven Strahlung ausgeben und eine dritte Farbe bei Fehlen eines Alarms ausgeben.

11. Portal gemäß Anspruch 10, **gekennzeichnet durch** die Tatsache, dass das Modul (30) geeignet ist, um die Lichtquellen (40) derart zu steuern, dass diese bei der Detektion von Metallmassen eine rote Farbe ausgeben, bei der Detektion einer radioaktiven Strahlung eine blaue Farbe ausgeben und bei Fehlen eines Alarms eine grüne Farbe ausgeben.

12. Portal gemäß Anspruch 1 bis 11, **gekennzeichnet durch** die Tatsache, dass das Modul (30) geeignet ist, um die Ausgabe einer spezifischen Farbe bei der Detektion von Blei oder jedem äquivalenten Material, das geeignet ist, eine Maskierungshülle einer radioaktiven Quelle zu bilden, zu steuern.

13. Portal gemäß Anspruch 1 bis 12, **gekennzeichnet durch** die Tatsache, dass das Modul (30) geeignet ist, um die Ausgabe einer violetten Farbe bei der Detektion von Blei oder jedem äquivalenten Material, das geeignet ist, eine Maskierungshülle einer radioaktiven Quelle zu bilden, zu steuern.

14. Portal gemäß Anspruch 1 bis 13, **gekennzeichnet durch** die Tatsache, dass es eine Serie von Lichtquellen (40) zur Anzeige der Alarme auf jedem der zwei Pfosten (12, 14) umfasst.

15. Portal gemäß Anspruch 1 bis 14, **gekennzeichnet durch** die Tatsache, dass es eine Serie von Lichtquellen (40) umfasst, um die Alarme auf jeder Seite vor und hinter den Pfosten (12, 14) in Bezug auf die Durchgangsrichtung derselben anzuzeigen.

16. Portal gemäß Anspruch 1 bis 15, **gekennzeichnet durch** die Tatsache, dass es eine Serie von Lichtquellen (40) zur Anzeige der Alarme auf jedem der zwei Pfosten (12, 14) umfasst und dass das Versorgungs- und Bearbeitungsmodul (30) geeignet ist, um die zwei Serien von Lichtquellen (40) zu steuern, die jeweils auf jedem der zwei Pfosten (12, 14) auf unterschiedliche Weise in Abhängigkeit von der horizontalen, lateralen Position der detektierten Objekte vorgesehen sind: identische Versorgung der zwei Serien von Quellen (40) für ein im Zentrum des Portals detektiertes Objekt, Versorgung der Serie von Quellen (40) allein, die sich auf der linken Seite des Portals befindet, für ein auf der linken Seite des Portals detektiertes Objekt und Versorgung der Serie von Quellen (40) allein, die sich auf der rechten Seite des Portals für ein auf der rechten Seite des Portals detektierten Objekts befindet.

## Claims

1. Metal detector portal comprising two vertical bars (12, 14) housing sensors that form a metal mass detector, in particular emitting/receiving coils (20, 22), associated with a supplying and processing module (30), and defining between them a channel for the passing of individuals to be controlled, and a radioactive radiation detector (25) associated with the supplying and processing module (30) **characterised by** the fact that at least one of the vertical bars (12, 14) comprises a set of light sources (40) distributed along its height for viewing alarms, and that said module is adapted to control the light sources (40) in such a way that the latter emit a first colour during the detection of metal masses and emit a second colour, different from the first colour, during the detection of a radioactive radiation.

2. Portal according to claim 1, **characterised by** the fact that the supplying and processing module (30) and the set of light sources (40) are adapted to generate optical radiation of different colours according to the nature of the signal detected by said module (30) on the receiving coils (22).

3. Portal according to one of claims 1 or 2, **characterised by** the fact that the set of light sources (40) distributed over the height of a vertical bar comprises n sets of sources (40.1, 40.2, ...40.n), distributed over the height, with each set comprising a single source adapted to emit a light wave of a different colour according to its excitation.

4. Portal according to one of claims 1 or 2, **characterised by** the fact that the set of light sources (40) distributed over the height of a vertical bar comprises n sets of sources (40.1, 40.2, ...40.n), distributed over the height, with each set comprising several light sources adapted for emitting optical radiation of a different wavelength according to the excitation signal received.

5. Portal according to one of claims 1 to 4, **characterised by** the fact that the colour emitted by a light source (40) depends on the intensity of the signal detected that represents a metal.

6. Portal according to one of claims 1 to 5, **characterised by** the fact that the colour emitted by a light source (40) depends on the size of the mass of metal detected.

7. Portal according to one of claims 1 to 6, **characterised by** the fact that the colour emitted by a light source (40) depends on the nature of the metal detected.

8. Portal according to one of claims 1 to 7, **characterised by** the fact that the colour emitted by a light source (40) makes it possible to distinguish between a non-magnetic material, a magnetic material and stainless steel.

9. Portal according to one of claims 1 to 8, **characterised by** the fact that the module (30) is adapted to control the light sources (40) in such a way that the latter emit a red colour during the detection of metal masses and emit a blue colour during the detection of radioactive radiation.

10. Portal according to one of claims 1 to 9, **characterised by** the fact that the module (30) is adapted to control the light sources (40) in such a way that the latter emit a first colour during the detection of metal masses, emit a second colour during the detection of radioactive radiation and emit a third colour in the absence of an alarm.

11. Portal according to claim 10, **characterised by** the fact that the module (30) is adapted to control the light sources (40) in such a way that the latter emit a red colour during the detection of metal masses, emit a blue colour during the detection of radioactive radiation and emit a green colour in the absence of an alarm.

12. Portal according to one of claims 1 to 11, **characterised by** the fact that the module (30) is adapted to control the emission of a specific colour, during the detection of lead or any equivalent material that can form a masking envelope of a radioactive source.

13. Portal according to one of claims 1 to 12, **characterised by** the fact that the module (30) is adapted to control the emission of a violet colour, during the detection of lead or any equivalent material that can form a masking envelope of a radioactive source.

14. Portal according to one of claims 1 to 13, **characterised by** the fact that it comprises a set of light sources (40) for viewing alarms, on each one of the two vertical bars (12, 14).

15. Portal according to one of claims 1 to 14, **characterised by** the fact that it comprises a set of light sources (40) for viewing alarms, on each one of the upstream and downstream sides of the vertical bars (12, 14), in reference to the direction of passage, of the latter.

16. Portal according to one of claims 1 to 15, **characterised by** the fact that it comprises a set of light sources (40) for viewing alarms, on each one of the two vertical bars (12, 14) and that the supplying and processing module (30) is adapted to control the two sets of light sources (40) provided respectively on each one of the two vertical bars (12, 14), differently according to the lateral horizontal position of the objects detected: identical supplying of the two sets of sources (40) for an object detected at the centre of the portal, supplying of the single set of sources (40) located on the left side of the portal for an object detected on the left side of the portal and supplying of the single set of sources (40) located on the right side of the portal for an object detected on the right side of the portal.
